# EUROPÄISCHE PATENTSCHRIFT

(11) **EP 1 382 110 B1**
(45) Veröffentlichungstag und Bekanntmachung des Hinweises auf die Patenterteilung: **26.05.2010**
(21) Anmeldenummer: 01990293.1
(22) Anmeldetag: 13.12.2001
(51) Int. Cl.: H02P 6/18

(54) **VERFAHREN UND VORRICHTUNG ZUR ERMITTLUNG DER ROTORPOSITION EINES ELEKTROMOTORS MIT MEHREREN MOTORSTRÄNGEN**
METHOD AND DEVICE FOR DETERMINING THE ROTOR POSITION OF AN ELECTRIC MOTOR WITH SEVERAL MOTOR STRINGS
PROCEDE ET DISPOSITIF POUR DETERMINER LA POSITION DU ROTOR D'UN MOTEUR ELECTRIQUE COMPORTANT PLUSIEURS PHASES DE MOTEUR

(30) Priorität: 22.12.2000 DE 10064486
(43) Veröffentlichungstag der Anmeldung: 21.01.2004
(73) Patentinhaber: ROBERT BOSCH GMBH, 70442 Stuttgart (DE)
(72) Erfinder: HEIDRICH, Torsten, 71665 Vaihingen/Enz (DE)
(86) Internationale Anmeldenummer: PCT/DE2001/004690
(87) Internationale Veröffentlichungsnummer: WO 2002/052714

(56) Entgegenhaltungen:
- EP-A- 0 363 073
- US-A- 4 495 450
- US-A- 5 202 614
- US-A- 5 202 616
- US-A- 5 859 520

## Beschreibung

### STAND DER TECHNIK

Die Erfindung betrifft ein Verfahren zur Ermittlung der Rotorposition eines Elektromotors mit mehreren Motorsträngen, insbesondere eines bürstenlosen Gleichstrommotors. Die Erfindung betrifft ferner ein Erfassungsmodul hierfür.

In zahlreichen Bereichen der Technik, insbesondere auch im Kraftfahrzeugbereich, verwendet man neuerdings sogenannte bürstenlose Gleichstrommotoren, die auch als BLDC-Motoren (BLDC = Brushless Direct Current) bekannt sind und keine verschleißanfälligen Bürsten aufweisen. Statt einer mechanischen Kommutierung ist bei BLDC-Motoren eine elektronische Kommutierung vorgesehen, die im Allgemeinen durch eine Leistungselektronik realisiert ist. BLDC-Motoren werden auch elektronisch kommutierte Gleichstrommotoren oder EC-Motoren genannt (EC = electronically commutated).

Ein BLDC-Motor wird mit Hilfe eines als Kommutator dienenden leistungselektronischen Stellgliedes betrieben, beispielsweise mit einem 6-pulsigen Brücken-Umrichter, der mit Hilfe einer Pulsmodulation, im Allgemeinen einer Pulsweitenmodulation, aus einer Batterie- oder Zwischenkreis-Gleichspannung ein dreiphasiges, in Frequenz und Spannungsamplitude variables Wechselspannungssystem erzeugt, so dass für den BLDC-Motor beispielsweise im Wesentlichen rechteckförmige Stromblöcke bereitgestellt werden. Die Bestromung der Motorstränge des Elektromotors, also die Bestromung von dessen Wicklungen, erfolgt dabei in Abhängigkeit von dessen jeweiliger Rotorlage. Üblicherweise werden zwei Stränge gleichzeitig bestromt. Dabei sind diesen zugeordnete Zweige des Brücken-Umrichters aktiv und bestromen einen ersten Motorstrang positiv und einen zweiten Motorstrang negativ. Die Schalter eines dritten Brücken-Umrichter-Zweiges sind dabei geöffnet und somit ist der dritte Zweig inaktiv.

Durch den Rotor des Elektromotors, der z.B. eine Permanentmagnetanordnung aufweist, wird eine Gegenspannung in die Motorwicklungen, also in die jeweiligen Motorstränge induziert. Für einen hohen Motorwirkungsgrad sind die Motorstränge derart zu bestromen, dass in sie eine höchstmögliche Strang-Gegenspannung gleicher Polarität wie der jeweilige Strangstrom induziert wird.

Jedenfalls müssen bei einem BLDC-Motor dessen aktuelle Rotorpositionen zur Ermittlung optimaler Kommutierungszeitpunkte bekannt sein. Die Rotorpositionen bzw. Kommutierungszeitpunkte können z.B. durch eine Sensoranordnung oder auch sensorlos bestimmt werden, beispielsweise durch Auswertung der Nulldurchgänge der induzierten Gegenspannungen in den jeweils nicht bestromten Motorsträngen. Aus den Nulldurchgängen kann man den Rotorwinkel für die nächste Kommutierung durch Extrapolation ermitteln. Allerdings ist dieses Verfahren nur für Elektromotoren geeignet, die als Dauerläufer betrieben werden, z.B. in Pumpen oder Lüftern.

Bei Motoren mit einer Drehzahlregelung bis hin zu einem Motorstillstand, beispielsweise bei Motoren für Positionierantriebe, sind dynamischere Verfahren zur Ermittlung der Rotorposition erforderlich. Allerdings treten dabei einige Schwierigkeiten auf:

Durch Pulsweitenmodulation (PWM) der Schalter in den beiden aktiven Zweigen des Brücken-Umrichters wird der in den aktiven, bestromten Motorsträngen fließende Strom eingestellt und begrenzt. Allerdings werden durch die Pulsweitenmodulation Störimpulse hervorgerufen, die sich unter anderem durch Koppelinduktivitäten zwischen den einzelnen Motorsträngen auf den nicht bestromten, inaktiven Strang übertragen, so dass bei diesem der Nulldurchgang der induzierten Spannung nicht störungsfrei und zuverlässig gemessen werden kann. Die Taktstörungen müssen für die Auswertung aus dem jeweiligen Messsignal ausgefiltert werden.

Bei analogen Filtern treten dabei jedoch unter anderem Phasenverschiebungen auf, die störende Messfehler hervorrufen.

Ein digitales Filterverfahren wird in der US 5,859,520 vorgeschlagen. Bei diesem Verfahren wird ein Nulldurchgang der induzierten Spannung dadurch gemessen, dass ein oberer Schalter eines Brückenzweiges getaktet wird, so dass sich ein Freilauf-Strom über den unteren Schalter desselben Brückenzweiges einstellt. Im Freilauf wird dann die in den dem betrachteten Brückenzweig zugeordneten Motorstrang induzierte Gegenspannung gegenüber einem Massepotential einer Mess-Schaltung gemessen. Nachteilig ist dabei zum Einen, dass nur die oberen Schalter der Brückenzweige getaktet werden können, und zum Anderen, dass durch Taktung der oberen Schalter sozusagen ein Zwangsfreilauf einzustellen ist, um die Messungen überhaupt durchführen zu können. Aus dem Zwangsfreilauf resultiert jedoch eine geringere potentielle Motorausnutzung.

### VORTEILE DER ERFINDUNG

Das erfindungsgemäße Verfahren mit den Merkmalen des Hauptanspruchs sowie das nach dem Verfahren arbeitende erfindungsgemäße Erfassungsmodul haben demgegenüber den Vorteil, dass kein Zwangsfreilauf zur Ermittlung der Polarität von in die Motorstränge induzierter Gegenspannungen erforderlich ist und demzufolge eine optimale Motorausnutzung möglich ist.

Zur Bestimmung der Rotorposition wird die Polarität der in die Motorstränge induzierten Strang-Spannung ermittelt. Dazu werden die jeweiligen Strang-Spannungen mit Referenzwerten, insbesondere mit einer realen oder nachgebildeten, an einem Sternpunkt der Motorstränge anliegenden Sternpunktspannung, verglichen und jeweils Polaritätswerte gebildet. Zur Vermeidung von die Polaritätswerte jeweils verfälschenden Störungen wird auf die Einschaltzeitpunkte zur Bestromung der Motorstränge synchronisiert und eine vorbestimmte Wartezeit gewartet, in der die Polaritätswerte einen eingeschwungenen, stabilen Zustand erreicht haben. Erst dann werden die Polaritätswerte ermittelt und beispielsweise an eine Steuerung zur Steuerung des Elektromotors ausgegeben.

Das erfindungsgemäße Verfahren kann zusammen mit verschiedenartigen Freilaufverfahren durchgeführt werden. Die notwendige Auswerteschaltung ist kompakt und kann beispielsweise in eine Schaltung zur Steuerung des Elektromotors und/oder zur Steuerung einer den Elektromotor versorgenden Leistungselektronik integriert werden. Das erfindungsgemäße Verfahren kann variabel und ohne aufwändige Justierungen für einen großen Drehzahlbereich angewendet werden. Jedenfalls treten keine durch Phasenverschiebung hervorgerufene Messfehler auf, wie z.B. bei analogen Filtern.

Durch die in den Unteransprüchen aufgeführten Maßnahmen sind vorteilhafte Weiterbildungen und Verbesserungen des erfindungsgemäßen Verfahrens und des erfindungsgemäßen Erfassungsmoduls möglich.

Damit nicht eventuell mit Störungen behaftete Polaritätswerte ermittelt werden, werden diese zweckmäßigerweise nur dann ermittelt und gegebenenfalls ausgegeben, wenn innerhalb der Wartezeit kein Freilauf des Elektromotors auftritt.

Vorzugsweise wird nach Ablauf der vorbestimmten Wartezeit mit einer Abtastperiode begonnen, in der pro Motorstrang jeweils nicht nur ein Polaritätswert, sondern bei entsprechender Länge der Abtastperiode auch mehrere Polaritätswerte ermittelt werden können. Die Polaritätswerte werden jeweils in einen Speicher eingespeichert, wobei vorgesehen sein kann, dass ein später erfasster Polaritätswert einen vorher erfassten Polaritätswert ersetzt. Beispielsweise kann nur der jeweils letzte Polaritätswert eines Motorstranges gespeichert werden.

Zweckmäßigerweise wird dann der jeweils zuletzt ermittelte Polaritätswert ausgegeben.

Die Abtastperiode kann durch mehrere Ereignisse beendet werden, z.B. durch einen Freilauf des Elektromotors oder durch einen nachfolgenden Einschaltzeitpunkt zur Bestromung des Elektromotors.

Wie eingangs erwähnt, wird in üblichen Verfahren der Elektromotor mit Hilfe einer Pulsweitenmodulation zur Einstellung und Begrenzung der jeweils in den Motorsträngen fließenden Ströme bestromt. Die Einschaltzeitpunkte zur Bestromung der Motorstränge des Elektromotors werden dabei zweckmäßigerweise durch einen Pulsweitenmodulations-Grundtakt definiert. Dieser Pulsweitenmodulations-Grundtakt wird zweckmäßigerweise zur Synchronisation bei der Ermittlung der Polaritätswerte eingesetzt.

Es ist auch möglich, dass der Pulsweitenmodulations-Grundtakt jeweils bei einer Kommutierung der Bestromung des Elektromotors durch ein Synchronisationssignal neu gestartet wird. Bei einer Kommutierung wechselt die Bestromung üblicherweise von einem Paar von Motorsträngen zu einem benachbarten Motorstrang-Paar. In einer vorteilhaften Variante der Erfindung wird die Ermittlung der Polaritätswerte anhand des Synchronisationssignals jeweils neu synchronisiert. Zweckmäßigerweise dienen sowohl das Synchronisationssignal als auch Pulsweitenmodulations-Grundtakt zur Synchronisierung der Ermittlung der Polaritätswerte. Sehr einfach lässt sich dies beispielsweise dadurch realisieren, dass der Grundtakt und das Synchronisationssignal mit logisch "ODER" zusammengefasst werden.

Die Strang-Spannungen sowie die Sternpunktspannung können zwar prinzipiell an den jeweiligen Motorsträngen bzw. am Sternpunkt der Motorstränge abgegriffen werden. Die jeweiligen Messpunkte sind jedoch oftmals schwer zugänglich. Daher die werden die Strang-Spannungen und/oder die Sternpunktspannung vorteilhafterweise nachgebildet.

### ZEICHNUNG

Ausführungsbeispiele der Erfindung sind in den Zeichnungen dargestellt und in der nachfolgenden Beschreibung näher erläutert. Es zeigen
- Figur 1A: eine Anordnung aus einem Brücken-Umrichter mit angeschlossenen Motorsträngen eines Elektromotors sowie einen-Stromverlauf im Bestromungszustand,
- Figur 1B: die Anordnung aus Figur 1A mit einem Stromverlauf bei Freilauf des Elektromotors,
- Figur 2A: schematische und beispielhafte Verläufe von Strömen bei Bestromung des Elektromotors aus den Figuren 1A, 1B sowie dabei in die Motorstränge jeweils induzierte Spannungen,
- Figur 2B: eine gepulste Bestromung eines Motorstranges aus Figur 2A,

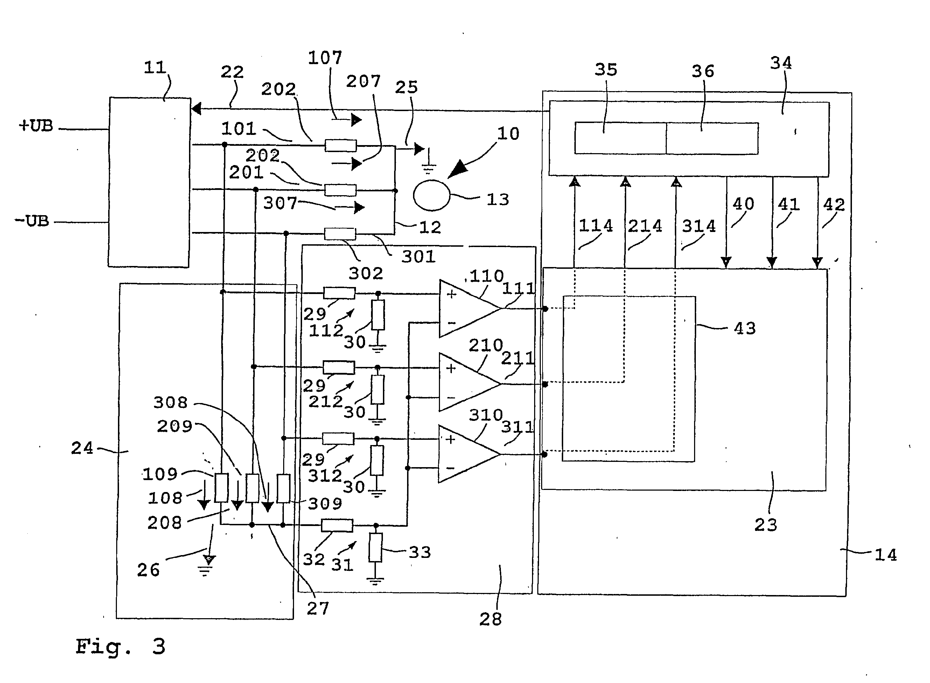

- Figur 3: die Anordnung aus den Figuren 1A, 1B mit einer Motorsteuerung, die ein erfindungsgemäßes Erfassungsmodul aufweist,
- Figur 4: ein Zustandsübergangsdiagramm einer ersten Variante der erfindungsgemäßen Verfahrens und
- Figur 5: ein Zustandsübergangsdiagramm einer zweiten Variante der erfindungsgemäßen Verfahrens.

### BESCHREIBUNG DER AUSFÜHRUNGSBEISPIELE

Ein Elektromotor 10 ist an einen sechspulsigen Brücken-Umrichter 11 als leistungselektronische Versorgungseinheit des Elektromotors angeschlossen. Bei dem Elektromotor 10 handelt es sich um einen bürstenlosen, sogenannten elektronisch kommutierten Gleichstrom-Elektromotor (BLDC-Motor) der eingangs beschriebenen Art. Von dem Elektromotor 10 sind lediglich Motorstränge 101, 201, 301 mit Motorwicklungen 102, 202, 302 gezeigt, die im Stator des Elektromotors 10 angeordnet sind und zu einem Sternpunkt 12 zusammengeschaltet sind. In dem nicht dargestellten Stator läuft ein aus Gründen der Übersichtlichkeit nicht dargestellter permanentmagnetisch oder elektrisch erregter Rotor 13, der bei seiner Rotation Spannungen in die Motorstränge 101, 201, 301 induziert.

Eine Motorsteuerung 14 steuert über eine Steuerleitung 22 den Brücken-Umrichter 11 und somit den Elektromotor 10. Der Brücken-Umrichter 11 wird weist drei Brückenzweige 103, 203, 303 auf, die jeweils ein oberes schaltbares Ventil 104, 204, 304 und ein unteres schaltbares Ventil 105, 205, 305 aufweisen. Die Ventile 104, 105; 204, 205; 304, 305 werden durch die Motorsteuerung 14 ein- und ausgeschaltet, wobei vorliegend eine Pulsweitenmodulation (PWM) eingesetzt wird.

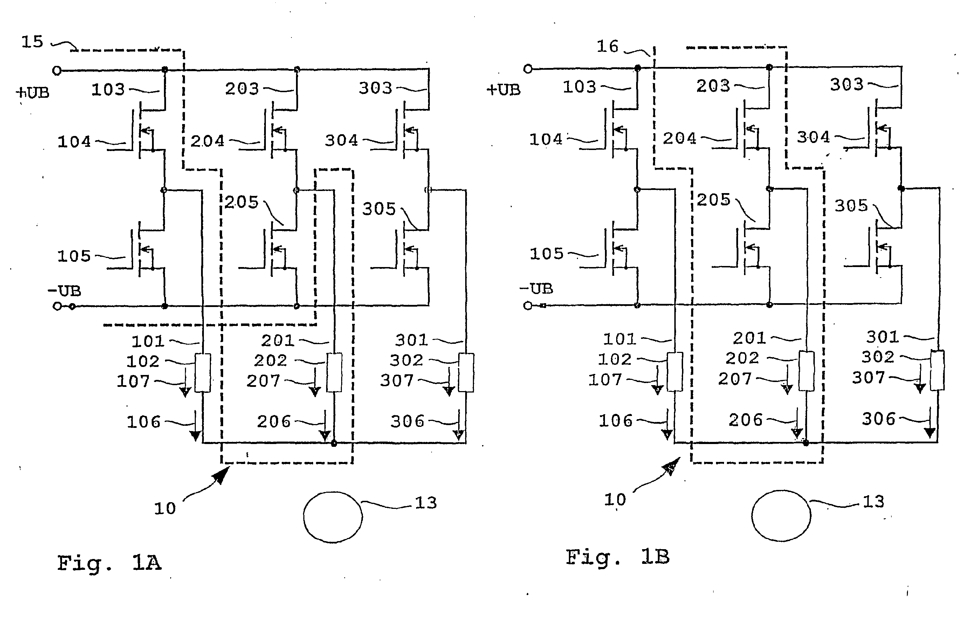

Eingansseitig ist der Brücken-Umrichter 11 an eine Batterie oder einen Gleichsrannungszwischenkreis mit einem positiven Spannungspotential +U_{B} und einem negativen Spannungspotential -U_{B} angeschlossen. Ausgangsseitig sind die Motorstränge 101, 201, 301 jeweils zwischen den Ventilen 104, 105; 204, 205; 304, 305 an die Brückenzweige 103, 203, 303 angeschlossen. Die Ventile 104, 105; 204, 205; 304, 305 sind beispielsweise Leistungstransistoren, über die ein Stromfluss in Richtung von dem positiven Spannungspotential +U_{B} zum negativen Spannungspotential -U_{B} oder vom Abgriff der Motorstränge 101, 201, 301 an den Brückenzweigen 103, 203, 303 in Richtung zum negativen Spannungspotential -U_{B} ein- und ausschaltbar ist. In Gegenrichtung weisen die Ventile 104, 105; 204, 205; 304, 305 vorliegend als Schutz gegen induzierte Überspannungen jeweils eine interne, durch einen Pfeil angedeutete Diode auf. Es ist auch möglich, dass eine externe Diode zu den Ventilen 104, 105; 204, 205; 304, 305 geschaltet ist. Jedenfalls erlauben die Dioden einen Freilauf des Elektromotors 10, z.B. den in Figur 1B dargestellten Freilauf.

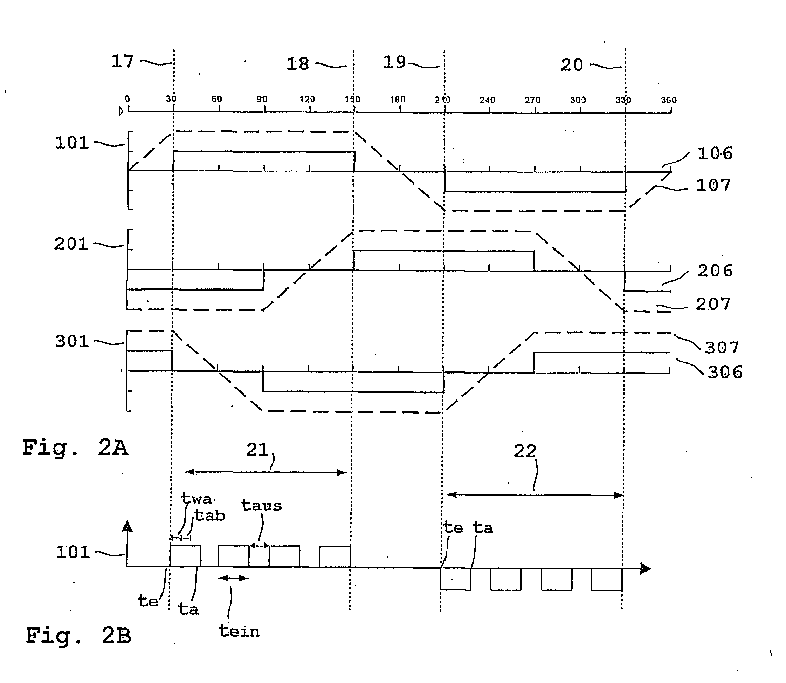

Die jeweils über die Motorstränge 101, 201, 301 fließenden Strangströme 106, 206, 306 werden von der Motorsteuerung 14 durch Ein- und Ausschalten der Ventile 104, 105; 204, 205; 304, 305 eingestellt. Typischerweise werden, wie im Ausführungsbeispiel dargestellt, jeweils zwei Motorstränge 101, 201, 301 gleichzeitig bestromt. Dabei wird ein Motorstrang 101, 201, 301 positiv und der zweite Strang negativ bestromt. Ein idealisierter Kommutierungsmuster für eine elektrische Umdrehung des Rotors 13 zeigt Abbildung 2A, in der die die Motorstränge 101, 201, 301 durchfließenden Strangströme 106, 206, 306 und vom elektro- oder permanentmagnetisch erregten Rotor 13 in die Motorstränge 101, 201, 301 induzierte Strangspannungen 107, 207, 307 in gestrichelten Linien dargestellt sind.

Man erkennt, dass zwischen Kommutierungszeitpunkten 17, 18, die zwischen den in Drehrichtung des Elektromotors 10 liegenden elektrischen Winkeln 30° und 150° liegen, der Motorstrang 101 positiv und der Motorstrang 201 negativ bestromt wird und zwischen elektrisch 210° und 330° liegenden Kommutierungszeitpunkten 19, 20 der Motorstrang 201 positiv und der Motorstrang 101 negativ bestromt ist. Beispielsweise sind die Ventile 104, 205 zur Einstellung eines Bestromungszustandes zwischen den Kommutierungszeitpunkten 17, 18 eingeschaltet, wie in Figur 1A dargestellt. Dort ist ferner ein vom positiven Spannungspotential +U_{B} über das Ventil 104, die Motorwicklungen 102, 202 und das Ventil 205 zum negativen Spannungspotential -U_{B} fließender Strom 15 gezeigt.

Für einen hohen Motorwirkungsgrad des Elektromotors 10 wird ein Motorstrang 101, 201, 301 immer bei höchst möglicher induzierter Strangspannung 107, 207, 307 gleicher Polarität bestromt. Im dem in Figur 2A gezeigten Schaltschema sind die Motorstränge 101, 201, 301 jeweils zwischen den jeweiligen Kommutierungszeitpunkten entweder durchgehend bestromt oder durchgehend nicht bestromt. Der Elektromotor 10 ist dabei unter Volllast.

Durch gepulstes Schalten der Ventile 104, 105; 204, 205; 304, 305, vorliegend mit Hilfe von Pulsweitenmodulation, werden die jeweils in den Motorsträngen 101, 201, 301 fließenden Strangströme 106, 206, 306 begrenzt, wobei der Elektromotor 10 jeweils kurzzeitig in Freilauf übergeht. Ein solcher Freilaufzustand ist in Figur 1B gezeigt. Dabei wird das Ventil 205 geschlossen, so dass sich ein über das Ventil 104, die Motorwicklungen 102, 202 und die interne Diode des Ventils 204 fließender Freilaufstrom 16 einstellt.

Ein abwechselndes Schalten des Ventils 205 für einen Wechsel zwischen Bestromungs- und Freilaufzustand für die Motorstränge 101, 201 ist in Figur 2B dargestellt. Der Motorstrang 301 ist dabei stromlos geschaltet und von den Spannungspotentialen +U_{B}, -U_{B} elektrisch getrennt. Das Ventil 205 wird jeweils zu Einschaltzeitpunkten tₑ für eine Einschaltzeit tₑᵢₙ eingeschaltet (Bestromungszustand) und zu Einschaltzeitpunkten tₐ für eine Ausschaltzeit tₐᵤₛ ausgeschaltet (Freilaufzustand). Die Motorsteuerung 14 stellt dabei für den Motorstrang 101 zwischen den Kommutierungszeitpunkten 17, 18 eine Folge 21 von Stromblöcken mit positivem Strangstrom 106 ein, zwischen den Kommutierungszeitpunkten 19, 20 eine Folge 22 von Stromblöcken mit negativem Strangstrom 106.

Es versteht sich, dass die Motorsteuerung 14 auch andere Kommutierungsmuster der Strangströme 106, 206, 306 und/oder Pulsmuster der Strangströme 106, 206, 306 durch entsprechendes Schalten der Ventile 104, 105; 204, 205; 304, 305 einstellen kann.

Die Motorsteuerung 14 enthält ein Erfassungsmodul 23 zur Ermittlung der Rotorposition des Elektromotors 10. Dem Erfassungsmodul 23 ist vorliegend ein Nachbildungsmodul 24 vorgeschaltet, das die Strangspannungen 107, 207, 307 als virtuelle Strangspannungen 108, 208, 308 nachbildet und aus den virtuellen Strangspannungen 108, 208, 308 eine virtuelle Sternpunktspannung 26 nachbildet. Die virtuellen Strangspannungen 108, 208, 308 fallen an Widerständen 109, 209, 309 ab, die jeweils eingangsseitig parallel zu den Motorwicklungen 102, 202, 302 mit den Brückenzweigen 103, 203, 303 verbunden sind und die ausgangsseitig zu einem virtuellen Sternpunkt 27 zusammengeschaltet sind, an dem die virtuelle Sternpunktspannung 26 abfällt. Jedenfalls ist es aufgrund des Nachbildungsmoduls 24 nicht erforderlich, dass der (reale) Sternpunkt 12 zur Erfassung der (realen) Sternpunktspannung 25 kontaktiert wird.

Zwischen das Nachbildungsmodul 24 und das Erfassungsmodul 23 ist ein Komparatormodul 28 zur Ermittlung der Polarität der Strangspannungen 107, 207, 307 geschaltet. Das Komparatormodul 28 vergleicht die Strangspannungen 107, 207, 307 mit der einen Referenzwert bildenden virtuellen Sternpunktspanhung 26. Das Komparatormodul 28 enthält als Komparatoren beschaltete Operationsverstärker 110, 210, 310, die eingangsseitig an ihnen anliegende Spannungsdifferenzen zwischen den Strangspannungen 107, 207, 307 einerseits und jeweils der virtuellen Sternpunktspannung 26 andererseits vergleichen und ausgangsseitig die dabei ermittelte Polarität der jeweiligen Spannungsdifferenz als Polaritätswerte 111, 211, 311 in Form von Ausgangsspannungen ausgeben. Die Polaritätswerte 111, 211, 311 springen bei einem Polaritätswechsel der jeweiligen Spannungsdifferenz von einem negativen zu einem positiven Maximalwert und umgekehrt. Die Operationsverstärker 110, 210, 310 sind in nicht dargestellter Weise mit einer Versorgungsspannung verbunden.

Die Strangspannungen 107, 207, 307 liegen an Spannungsteilern 112, 212, 312 an, die den Plus-Eingängen der-Operationsverstärker 110, 210, 310 vorgeschaltet sind und jeweils einen parallel zu den Motorwicklungen 102, 202, 302 mit den Brückenzweigen 103, 203, 303 verbundenen Widerstand 29 und einen mit diesem verbundenen und gegen Masse geschalteten Widerstand 30 aufweisen. Die virtuelle Sternpunktspannung 26 liegt an einem Spannungsteiler 31 an, der einen zwischen den virtuellen Sternpunkt und die Minus-Eingänge der Operationsverstärker 110, 210, 310 geschalteten Widerstand 32 und einen zwischen die Minus-Eingänge und Masse geschalteten Widerstand 33 aufweist. Jedenfalls werden durch die Spannungsteiler 112, 212, 312; 31 die Strangspannungen 107, 207, 307 sowie die virtuelle Sternpunktspannung 26 auf ein durch die Operationsverstärker 110, 210, 310 verarbeitbares Maß dimensioniert. Eine geeignete Dimensionierung der Widerstände 29, 30; 32, 33 ist dem Fachmann bekannt und hängt unter anderem von den Eigenschaften der Operationsverstärker 110, 210, 310 ab.

Das Erfassungsmodul 23 enthält als Erfassungsmittel vorliegend ein erfindungsgemäß programmiertes logisches Feld, das z.B. ein sogenanntes (Field) Programmable Logic Array ((F) PLA) oder ein sogenanntes (Field) Programmable Gate Array ( (F) PGA) sein kann. Prinzipiell können die Erfassungsmittel auch durch eine diskrete Logikschaltung oder einen geeigneten -Prozessor gebildet werden, der ein erfindungsgemäßes Programm-Modul ausführt. Die Erfassungsmittel des Erfassungsmoduls 23 sind zur Ermittlung der Polaritätswerte 111, 211, 311 auf die Einschaltzeitpunkte, z.B. die Einschaltzeitpunkte tₑ, zur Bestromung der Motorstränge 101, 201, 301 synchronisierbar und zwar derart, dass sie die Polaritätswerte 111, 211, 311 nach einer sich an die jeweiligen Einschaltzeitpunkte anschließenden, vorbestimmten Wartezeit t_{wa} ermitteln. Eine solche Wartezeit t_{wa} nach Beginn der Bestromung des Motorstrangs 101 ist in Figur 2B beispielhaft eingezeichnet.

Das Erfassungsmodul 23 tastet die Polaritätswerte 111, 211, 311 nach einen erfindungsgemäßen, später anhand von zwei Varianten beispielhaft erläuterten Verfahren ab, und "filtert" aus den sozusagen "rohen" Polaritätswerten 111, 211, 311 eventuell enthaltene Störungen aus. Anschließend gibt das Erfassungsmodul 23 aus den rohen Polaritätswerten 111, 211, 311 ermittelte, sozusagen digital gefilterte Polaritätswerte 114, 214, 314 an ein Steuermodul 34 der Motorsteuerung 14 aus, das den Brücken-Umrichter 11 steuert.

Das Steuermodul 34 ermittelt dann anhand von Signalwechseln der Polaritätswerte 114, 214, 314 den jeweiligen elektrischen Referenzwinkel des Rotors 13 und somit die zugeordneten Kommutierungszeitpunkte. Diese Funktion könnte jedoch auch durch das Erfassungsmodul 23 erfüllt werden. Zwischenwerte der Referenzwinkel, die nicht aus den Polaritätswerten 114, 214, 314 unmittelbar abgelesen werden können, können von dem Steuermodul 34 oder dem Erfassungsmodul 23 beispielsweise durch Extrapolation ermittelt werden. Zudem ist es möglich, dass das Erfassungsmodul 23 und/oder das Steuermodul 34 nur denjenigen der Polaritätswerte 114, 214, 314 ausgeben, der einem momentan nicht bestromten Motorstrang 101, 201, 301 zugeordnet ist, z.B. zwischen den Kommutierungszeitpunkten 17, 18 zunächst den Polaritätswert 311 des Motorstrangs 301 und dann den Polaritätswert 211 des Motorstrangs 201.

Das Steuermodul 34 ist lediglich schematisch und beispielhaft in Form von einem Steuermittel 35 und Speichermitteln 36 dargestellt. Bei dem Steuermittel 35 handelt es sich um einen Prozessor oder um eine Gruppe von Prozessoren, beispielsweise Digitale Signalprozessoren, die Programmcode von Programm-Modulen ausführen können, die in den Speichermitteln 36 gespeichert sind. Das Steuermodul 34 steuert einerseits den Brücken-Umrichter 11 und gibt dabei die Schaltmuster für die Ventile 104, 105; 204, 205; 304, 305 zur Einstellung von Bestromungs- und Freilaufzuständen vor. Andererseits gibt das Steuermodul 34 an das Erfassungsmodul 23 als Synchronisationssignale ein "Freilauf-EIN"-Signal 40 , ein "PWM-Takt-Starten"-Signal 41 und ein "PWM-Takt"-Signal 42 aus.

Das "PWM-Takt"-Signal 42 ist sozusagen der PWM-Grundtakt und wird jeweils zu den Einschaltzeitpunkten tₑ beispielsweise als logisch "1" ausgegeben. Es repräsentiert jeweils den Beginn eines Strompulses tₑᵢₙ auf einem der Motorstränge 101, 201, 301, also die Einschaltzeitpunkte tₑ der Bestromung der Motorstränge 101, 201, 301.

Im vorliegenden Beispiel wird der PWM-Grundtakt, also auch das "PWM-Takt"-Signal 42, jeweils bei einer Kommutierung, also z.B. zu den Kommutierungszeitpunkten 17, 18, 19, 20, jeweils neu gestartet. Das "PWM-Takt-Starten"-Signal 41 wird dabei als logisch "1" ausgegeben. Somit werden die Motorstränge 101, 201, 301, sofern sie zuvor nicht bestromt worden sind und eine Bestromung für den jeweiligen Motorstrang 101, 201, 301 vorgesehen ist, jeweils unmittelbar nach einer Kommutierung mit einem Strompuls bestromt. Der Beginn einer solchen Bestromung ist beispielsweise durch die Kommutierungszeitpunkte 17, 19 für den Motorstrang 101 in Figur 2B bestimmt.

Das "Freilauf-EIN"-Signal 40 wird jeweils zu Beginn eines Freilaufzustandes auf einem der Motorstränge 101, 201, 301, also zu den Zeitpunkten tₐ, beispielsweise als logisch "1", ausgegeben.

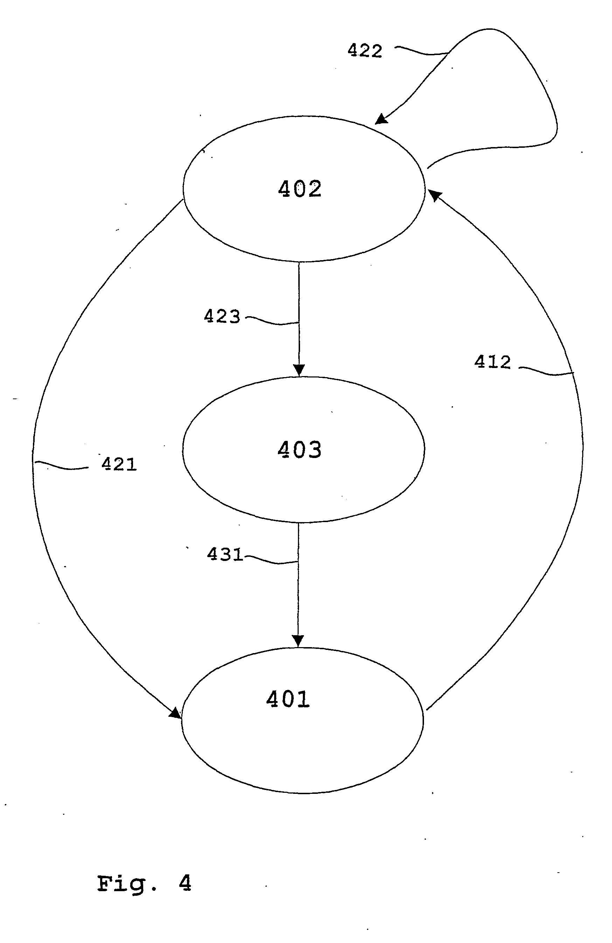

Eine erste Variante zur Ermittlung der Polaritätswerte 114, 214, 314 ist in Figur 4 dargestellt. Ausgangszustand ist dort ein Zustand "Warten auf Bestromung" 401. Wenn das Erfassungsmodul 23 in diesem Zustand eines der Signale "PWM-Takt-Starten"-Signal 41 oder "PWM-Takt"-Signal 42 mit logisch "1" empfängt, also von dem Steuermodul 34 ein Einschaltsignal zur Bestromung der Motorstränge 101, 201, 301 gegeben wird, geht das Erfassungsmodul 23 in einen ein Zustand "Bestromung eingeschalten" 402 über, was durch einen Übergang 412 angedeutet ist. Das Erfassungsmodul 23 ist somit auf einen Einschaltzeitpunkt zur Bestromung von mindestens einem der Motorstränge 101, 201, 301 synchronisiert.

Im Zustand "Bestromung eingeschalten" 402 startet das Erfassungsmodul 23 einen Timer, um eine vorbestimmte Wartezeit t_{wa} bis zur Abtastung Polaritätswerte 111, 211, 311 abzuwarten. Die Wartezeit t_{wa} ist insbesondere dafür vorgesehen, dass die Operationsverstärker 110, 210, 310 einen eingeschwungenen Zustand erreichen und stabile Polaritätswerte 111, 211, 311 ausgeben, und kann von einem Fachmann entsprechend ermittelt und eingestellt werden.

Nach Ablauf der Wartezeit t_{wa} geht das Erfassungsmodul 23 in einen Zustand "Abstasten und Ausgeben der Polaritätswerte" über (Übergang 423). In diesem Zustand tastet das Erfassungsmodul 23 die Polaritätswerte 111, 211, 311 ab und gibt sie als Polaritätswerte 114, 214, 314 an das Steuermodul 34 aus. Anschließend geht das Erfassungsmodul 23 in einem Übergang 431 wieder in den Zustand "Warten auf Bestromung" 401 über.

Wenn im Zustand "Bestromung eingeschalten" 402 das Steuermodul 34 den Brücken-Umrichter 11 zur Einstellung eines Freilaufes schaltet, vorliegend das Erfassungsmodul 23 das "Freilauf-EIN"-Signal 40 erhält, geht das Erfassungsmodul 23 ebenfalls in den Zustand "Warten auf Bestromung" 401 über.

Wenn das Erfassungsmodul 23 im Zustand "Bestromung eingeschalten" 402 erneut ein Signal "Bestromung eingeschalten", insbesondere das aufgrund einer Kommutierung gegebene "PWM-Takt-Starten"-Signal 41, möglicherweise auch das "PWM-Takt"-Signal 42, erhält, startet das Erfassungsmodul 23 den Timer erneut zur Ermittlung der vorbestimmten Wartezeit t_{wa}, was durch einen Übergang 422 dargestellt ist.

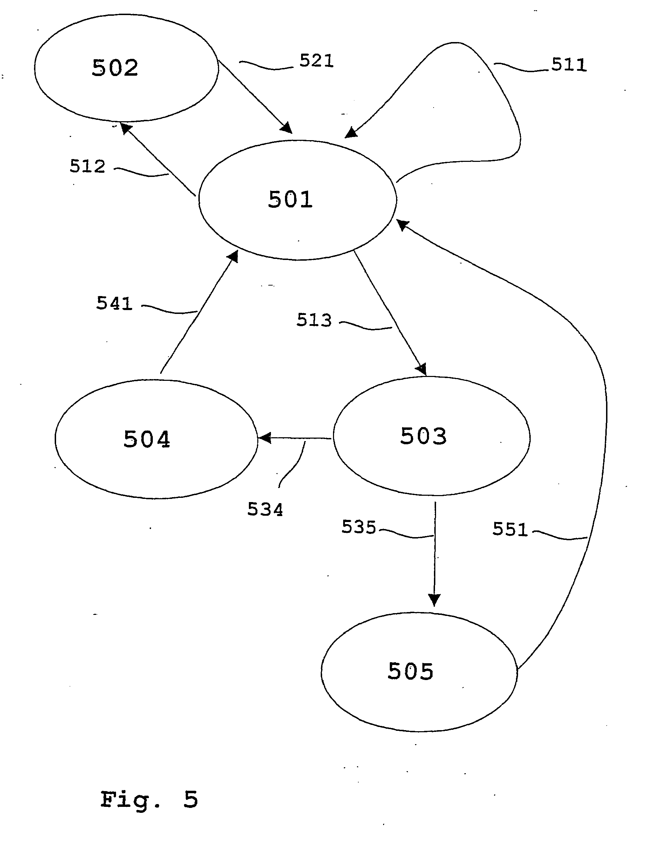

Eine zweite Variante zur Ermittlung der Polaritätswerte 114, 214, 314 ist in Figur 5 dargestellt. Ausgegangen wird von einem Zustand "Bestromung eingeschalten" 501, der aufgrund eines der Signale "PWM-Takt-Starten"-Signal 41 oder "PWM-Takt"-Signal 42 eingenommen wird. Im Zustand 501 startet das Erfassungsmodul 23 einen Timer, um eine vorbestimmte Wartezeit t_{wa} bis zur Abtastung Polaritätswerte 111, 211, 311 abzuwarten.

Wenn das Erfassungsmodul 23 im Zustand "Bestromung eingeschalten" 501 erneut ein Signal "Bestromung eingeschalten" erhält ("PWM-Takt-Starten"-Signal 41 oder "PWM-Takt"-Signal 42), startet es den Timer erneut zur Ermittlung der vorbestimmten Wartezeit t_{wa}, was durch einen Übergang 511 dargestellt ist.

Wenn das Erfassungsmodul 23 im Zustand "Bestromung eingeschalten" 501 das "Freilauf-EIN"-Signal 40 erhält, geht das Erfassungsmodul 23 in den Zustand "Freilauf vor Ablauf der Wartezeit" 502 über (Übergang 512), in welchem keine Abtastung der Polaritätswerte 111, 211, 311 erfolgt. Wenn das Erfassungsmodul 23 im Zustand "Freilauf vor Ablauf der Wartezeit" 502 ein Signal "Bestromung eingeschalten" erhält ("PWM-Takt-Starten"-Signal 41 oder "PWM-Takt"-Signal 42), geht es wieder in den Zustand "Bestromung eingeschalten" 501 über (Übergang 521).

Wenn im Zustand "Bestromung eingeschalten" 501 die Wartezeit t_{wa} abgelaufen ist, ohne dass eines der Synchronisationssignale 40, 41, 42 eingetroffen ist, geht das Erfassungsmodul 23 in einen Zustand "Bestromung nach Wartezeit aktiv" 503 über (Übergang 513). In diesem Zustand tastet das Erfassungsmodul 23 die Polaritätswerte 111, 211, 311 einmalig oder während einer Abtastperiode t_{ab} wiederholt ab, z.B. mit einer vorbestimmten Abtastfrequenz, und speichert sie in einem z.B. als Schieberegister ausgebildeten Speicher 43.

Wenn während des Zustands "Bestromung nach Wartezeit aktiv" 503 das "Freilauf-EIN"-Signal 40 eintrifft, der Elektromotor 10 also in Freilauf übergeht, geht das Erfassungsmodul 23 in einem Übergang 534 in einen Zustand "Ausgabe mit Freilauf" 504 über und gibt die jeweils letzten abgetasteten Polaritätswerte 111, 211, 311 als Polaritätswerte 114, 214, 314 aus. Bei einem Signal "Bestromung eingeschalten" ("PWM-Takt-Starten"-Signal 41 oder "PWM-Takt"-Signal 42), geht das Erfassungsmodul 23 wieder in den Zustand "Bestromung eingeschalten" 501 über (Übergang 541).

Wenn während des Zustands "Bestromung nach Wartezeit aktiv" 503 ein Signal "Bestromung eingeschalten" eintrifft ("PWM-Takt-Starten"-Signal 41 oder "PWM-Takt"-Signal 42), geht das Erfassungsmodul 23 in einen Zustand "Ausgabe ohne Freilauf" 505 über (Übergang 535), in welchem es die jeweils letzten abgetasteten Polaritätswerte 111, 211, 311 als Polaritätswerte 114, 214, 314 ausgibt. Unmittelbar danach geht das Erfassungsmodul 23 in einem Übergang 551 wieder in den Zustand "Bestromung eingeschalten" 501.

### Weitere Varianten der Erfindung sind ohne Weiteres möglich:

Das Erfassungsmodul 23 kann auch als ein Softwaremodul ausgebildet sein, das Programmcode enthält, der von einem Steuermittel, z.B. einem Prozessor, ausgeführt werden kann. Beispielsweise könnte der Prozessor 35 der Motorsteuerung 14 ein solches Softwaremodul ausführen. Das Erfassungsmodul 23 wäre dann aus funktionaler Sicht in das Steuermodul 34 integriert.

Es ist prinzipiell auch möglich, dass das Komparatormodul 28 die virtuellen Strangspannungen 108, 208, 308 mit der realen Sternpunktspannung 25 oder die virtuellen Strangspannungen 108, 208, 308 mit der virtuellen Sternpunktspannung 26 vergleicht.

Das Nachbildungsmodul 24 könnte Bestandteil des Erfassungsmoduls 23 und/oder der Motorsteuerung 14 sein.

Ferner könnte das Komparatormodul 28 in das Erfassungsmodul 23 und/oder die Motorsteuerung 14 integriert sein. Beispielsweise könnten das Komparatormodul 28 und/oder das Erfassungsmodul 23 durch einen ASIC-Baustein (Application Specific Integrated Circuit) realisiert sein.

Prinzipiell würde auch das "PWM-Takt"-Signal 42 zur Synchronisation des Erfassungsmoduls 23 auf die jeweiligen Einschaltzeitpunkte zur Bestromung der Motorstränge 101, 201, 301 genügen.

## Patentansprüche

1. Verfahren zur Ermittlung der Rotorposition eines Elektromotors (10) mit mehreren Motorsträngen (101, 201, 301), insbesondere eines bürstenlosen Gleichstrommotors, bei dem zur Bestimmung der Rotorposition die Polarität zumindest einer in zumindest einen ersten Motorstrang (101, 201, 301) induzierten Strang-Spannung (107, 207, 307) als mindestens ein erster Polaritätswert (111, 211, 311) durch Vergleich mit einem Referenzwert, insbesondere mit einer realen oder-nachgebildeten, an einem Sternpunkt der Motorstränge (101, 201, 301) anliegenden Sternpunktspannung (25, 26), ermittelt wird, **dadurch gekennzeichnet, dass** die Ermittlung des mindestens einen ersten Polaritätswertes (111, 211, 311) auf einen Einschaltzeitpunkt (tₑ) zur Bestromung des mindestens einen ersten oder eines zweiten Motorstranges (101, 201, 301) synchronisiert wird und dass der mindestens eine erste Polaritätswert (111, 211, 311) nach einer sich an den mindestens einen Einschaltzeitpunkt (tₑ) anschließenden, vorbestimmten Wartezeit (t_{wa}) ermittelt wird.

2. Verfahren nach Anspruch 1, **dadurch gekennzeichnet, dass** der mindestens eine erste Polaritätswert (111, 211, 311) nur dann ermittelt wird und/oder nur dann ausgegeben wird, wenn innerhalb der Wartezeit kein Freilauf des Elektromotors (10) auftritt.

3. Verfahren nach einem der Ansprüche 1 oder 2, **dadurch gekennzeichnet, dass** nach Ablauf der vorbestimmten Wartezeit (t_{wa}) eine Abtastperiode (t_{ab}) begonnen wird, in der zumindest ein zweiter Polaritätswert (111, 211, 311) ermittelt werden kann.

4. Verfahren nach Anspruch 3, **dadurch gekennzeichnet, dass** nach Ablauf der Abtastperiode (t_{ab}) der jeweils als letzter ermittelte mindestens eine erste oder zweite Polaritätswert (111, 211, 311) ausgegeben wird.

5. Verfahren nach einem der Ansprüche 3 oder 4, **dadurch gekennzeichnet, dass** die Abtastperiode (t_{ab}) durch einen Freilauf des Elektromotors (10) oder durch einen nachfolgenden Einschaltzeitpunkt (tₑ) zur Bestromung des Elektromotors (10) beendet wird.

6. Verfahren nach einem der vorhergehenden Ansprüche, **dadurch gekennzeichnet, dass** der Elektromotor (10) mit Hilfe einer Pulsweitenmodulation bestromt wird, dass die Einschaltzeitpunkte (tₑ) zur Bestromung der Motorstränge (101, 201, 301) des Elektromotors (10) durch einen Pulsweitenmodulations-Grundtakt (42) definiert werden und dass die Ermittlung des mindestens einen ersten Polaritätswertes (111, 211, 311) anhand des Pulsweitenmodulations-Grundtakts (42) synchronisiert wird.

7. Verfahren nach Anspruch 6, **dadurch gekennzeichnet, dass** der Pulsweitenmodulations-Grundtakt bei einer Kommutierung durch ein Synchronisationssignal (41) neu gestartet wird und dass die Ermittlung des mindestens einen ersten Polaritätswertes (111, 211, 311) anhand des Pulsweitenmodulations-Grundtakts (42) und/oder des Synchronisationssignals (41) synchronisiert wird.

8. Verfahren nach einem der vorhergehenden Ansprüche, **dadurch gekennzeichnet, dass** die mindestens eine Strang-Spannung (107, 207, 307) und/oder die Sternpunktspannung (25, 26) nachgebildet werden.

9. Verfahren nach einem der vorhergehenden Ansprüche, **dadurch gekennzeichnet, dass** ermittelt wird, ob der erste Motorstrang (101, 201, 301) nicht bestromt wird und dass der mindestens eine erste oder zweite Polaritätswert (111, 211, 311) dann ausgegeben wird, wenn der erste Motorstrang (101, 201, 301) nicht bestromt wird.

10. Erfassungsmodul zur Ermittlung der Rotorposition eines Elektromotors (10) mit mehreren Motorsträngen (101, 201, 301), insbesondere eines bürstenlosen Gleichstrommotors, das Erfassungsmittel zur Ermittlung der Polarität zumindest einer in zumindest einen ersten Motorstrang (101, 201, 301) induzierten Strang-Spannung (107, 207, 307) als mindestens ein erster Polaritätswert (111, 211, 311) durch Vergleich mit einem Referenzwert, insbesondere mit einer realen oder nachgebildeten, an einem Sternpunkt der Motorstränge (101, 201, 301) anliegenden Sternpunktspannung (25, 26), aufweist, **dadurch gekennzeichnet, dass** die Erfassungsmittel zur Ermittlung des mindestens einen ersten Polaritätswertes (111, 211, 311) auf einen Einschaltzeitpunkt (tₑ) zur Bestromung des mindestens einen ersten oder eines zweiten Motorstranges (101, 201, 301) synchronisierbar sind und dass die Erfassungsmittel derart ausgestaltet sind, dass sie den mindestens einen ersten Polaritätswert (111, 211, 311) nach einer sich an den mindestens einen Einschaltzeitpunkt (tₑ) anschließenden, vorbestimmten Wartezeit (t_{wa}) ermitteln können.

11. Erfassungsmodul nach Anspruch 10, **dadurch gekennzeichnet, dass** es Programmcode enthält, der von einem Steuermittel, insbesondere von einem Prozessor einer Motorsteuerung (14) zur Steuerung des Elektromotors (10), ausgeführt werden kann.

12. Motorsteuerung mit einem Erfassungsmodul (23) nach einem der Ansprüche 10 oder 11, die zur Steuerung des Elektromotors (10) ausgestaltet ist.

13. Speichermittel, insbesondere Diskette oder CD-ROM, Digital Versatile Disc, Festplattenlaufwerk oder dergleichen, mit einem darauf gespeicherten Erfassungsmodul nach Anspruch 11.

## Claims

1. Method for determining the rotor position of an electric motor (10) having a plurality of motor winding sections (101, 201, 301), in particular of a brushless direct-current motor, in which, in order to determine the rotor position, the polarity of at least one winding-section voltage (107, 207, 307), which is induced in at least one first motor winding section (101, 201, 301), is determined as at least one first polarity value (111, 211, 311) by comparison with a reference value, in particular with a real or simulated star-point voltage (25, 26), which is present at a star point of the motor winding sections (101, 201, 301), **characterized in that** the determination of the at least one first polarity value (111, 211, 311) is synchronized to a switching-on time (tₑ) for passing current through the at least one first or one second motor winding section (101, 201, 301), and **in that** the at least one first polarity value (111, 211, 311) is determined after a predetermined waiting time (t_{wa}) which follows the at least one switching-on time (tₑ).

2. Method according to Claim 1, **characterized in that** the at least one first polarity value (111, 211, 311) is determined and/or is output only when no freewheeling of the electric motor (10) occurs within the waiting time.

3. Method according to one of Claims 1 or 2,
**characterized in that**, after the predetermined waiting time (t_{wa}) has elapsed, a sampling period (t_{ab}) is started, in which at least one second polarity value (111, 211, 311) can be determined.

4. Method according to Claim 3, **characterized in that**, after the sampling period (t_{ab}) has elapsed, the respective most recently determined at least one first or second polarity value (111, 211, 311) is output.

5. Method according to one of Claims 3 or 4,
**characterized in that** the sampling period (t_{ab}) is ended by freewheeling of the electric motor (10) or by a subsequent switching-on time (tₑ) for passing current through the electric motor (10).

6. Method according to one of the preceding claims, **characterized in that** current is passed through the electric motor (10) with the aid of pulse-width modulation, **in that** the switching-on times (tₑ) for passing current through the motor winding sections (101, 201, 301) of the electric motor (10) are defined by a pulse-width modulation basic clock (42), and **in that** the determination of the at least one first polarity value (111, 211, 311) is synchronized on the basis of the pulse-width modulation basic clock (42).

7. Method according to Claim 6, **characterized in that** the pulse-width modulation basic clock is restarted by a synchronization signal (41) on commutation, and **in that** the determination of the at least one first polarity value (111, 211, 311) is synchronized on the basis of the pulse-width modulation basic clock (42) and/or of the synchronization signal (41).

8. Method according to one of the preceding claims, **characterized in that** the at least one winding-section voltage (107, 207, 307) and/or the star-point voltage (25, 26) are/is simulated.

9. Method according to one of the preceding claims, **characterized in that** the method determines whether no current is flowing through the first motor winding section (101, 201, 301) and **in that** the at least one first or second polarity value (111, 211, 311) is output when no current is flowing through the first motor winding section (101, 201, 301).

10. Detection module for determining the rotor position of an electric motor (10) having a plurality of motor winding sections (101, 201, 301), in particular of a brushless direct-current motor, which has detection means for determining the polarity of at least one winding-section voltage (107, 207, 307), which is induced in at least one first motor winding section (101, 201, 301), as at least one first polarity value (111, 211, 311) by comparison with a reference value, in particular with a real or simulated star-point voltage (25, 26) which is present at a star point of the motor winding sections (101, 201, 301), **characterized in that**, in order to determine the at least one first polarity value (111, 211, 311), the detection means can be synchronized to a switching-on time (tₑ) for passing current through the at least one first or one second motor winding section (101, 201, 301), and **in that** the detection means are designed such that they can determine the at least one first polarity value (111, 211, 311) after a predetermined waiting time (t_{wa}) which follows the at least one switching-on time (tₑ) .

11. Detection module according to Claim 10,
**characterized in that** the detection module contains program code which can be run by a control means, in particular by a processor of a motor controller (14) for controlling the electric motor (10).

12. Motor controller having a detection module (23) according to one of Claims 10 or 11, which is designed to control the electric motor (10).

13. Memory means, in particular a floppy disk or CD ROM, digital versatile disc, hard disk drive or the like, having a detection module according to Claim 11 stored in it.

## Revendications

1. Procédé de détermination de la position du rotor d'un moteur électrique (10) qui présente plusieurs barres de moteur (101, 201, 301), en particulier d'un moteur à courant continu sans balais, dans lequel, pour déterminer la position du rotor, la polarité d'au moins une tension de barre (107, 207, 307) induite dans une première barre (101, 201, 301) du moteur, qui constitue une première valeur de polarité (111, 211, 311), est déterminée par comparaison avec une valeur de référence et en particulier avec une tension (25, 26) de point d'étoile, réelle ou simulée, appliquée en un point d'étoile des barres (101, 201, 301) du moteur,
**caractérisé en ce que**
la détermination de la ou des premières valeurs de polarité (111, 211, 311) à un instant de branchement (tₑ) est synchronisée par rapport à l'alimentation en courant de la ou des premières barres ou d'une deuxième barre (101, 201, 301) et
**en ce que** la ou les premières valeurs de polarité (111, 211, 311) sont déterminées après un temps d'attente (t_{wa}) prédéterminé qui suit le ou les instants de branchement (tₑ).

2. Procédé selon la revendication 1, **caractérisé en ce que** la ou les premières valeurs de polarité (111, 211, 311) ne sont déterminées ou délivrées que si le moteur électrique (10) n'est pas passé en fonctionnement à vide au cours de la durée d'attente.

3. Procédé selon l'une des revendications 1 ou 2, **caractérisé en ce qu'**une période d'échantillonnage (t_{ab}) au cours de laquelle une deuxième valeur de polarité (111, 211, 311) peut être déterminée est lancée après que la durée d'attente (t_{wa}) prédéterminée s'est écoulée.

4. Procédé selon la revendication 3, **caractérisé en ce que** la ou les premières ou deuxièmes valeurs de polarité (111, 211, 311) déterminées en dernier lieu sont délivrées après que la période d'échantillonnage (t_{ab}) s'est écoulée.

5. Procédé selon l'une des revendications 3 ou 4, **caractérisé en ce que** la période d'échantillonnage (t_{ab}) est interrompue par le passage du moteur électrique (10) en fonctionnement à vide ou par un instant (tₑ) de branchement suivant d'alimentation du moteur électrique (10) en courant.

6. Procédé selon l'une des revendications précédentes, **caractérisé en ce que** le moteur électrique (10) est alimenté en courant à l'aide d'une modulation de la largeur d'impulsions, **en ce que** les instants (tₑ) de branchement d'alimentation en courant des barres (101, 201, 301) du moteur électrique (10) sont définis par une cadence de base (42) de la modulation de la largeur d'impulsions et **en ce que** la détermination de la ou des premières valeurs de polarité (111, 211, 311) est synchronisée à l'aide de la cadence de base (42) de la modulation de la largeur d'impulsions.

7. Procédé selon la revendication 6, **caractérisé en ce que** la cadence de base de la modulation de la largeur d'impulsions est relancée par un signal de synchronisation (41) lors d'une commutation et **en ce que** la détermination de la ou des premières valeurs de polarité (111, 211, 311) est synchronisée à l'aide de la cadence de base (42) de la modulation de la largeur d'impulsions et/ou du signal de synchronisation (41).

8. Procédé selon l'une des revendications précédentes, **caractérisé en ce que** la ou les tensions de barre (107, 207, 307) et/ou la tension de point d'étoile (25, 26) sont simulées.

9. Procédé selon l'une des revendications précédentes, **caractérisé en ce qu'**il détermine si la première barre (101, 201, 301) du moteur n'est pas alimentée en courant et **en ce que** la ou les premières ou deuxièmes valeurs de polarité (111, 211, 311) sont délivrées si la première barre (101, 201, 301) du moteur n'est pas alimentée en courant.

10. Module de détection destiné à déterminer la position du rotor d'un moteur électrique (10) qui présente plusieurs barres (101, 201, 301) de moteur, en particulier d'un moteur à courant continu sans balais, qui présente des moyens de détection qui déterminent la polarité d'au moins une tension de barre (107, 207, 307) induite dans au moins une première barre (101, 201, 301) du moteur sous la forme d'au moins une première valeur de polarité (111, 211, 311), par comparaison avec les valeurs de référence et en particulier avec la tension de point d'étoile (25, 26), réelle ou simulée, appliquée sur un point d'étoile des barres (101, 201, 301) du moteur,
**caractérisé en ce que**
les moyens de détection destinés à déterminer la ou les premières valeurs de polarité (111, 211, 311) peuvent être synchronisés par rapport à un instant (tₑ) de branchement d'alimentation de la ou des premières barres ou d'une deuxième barre (101, 201, 301) du moteur et
**en ce que** les moyens de détection sont configurés de manière à pouvoir déterminer la ou les premières valeurs de polarité (111, 211, 311) après un temps d'attente (t_{wa}) prédéterminé qui suit le ou les instants de branchement (tₑ).

11. Module de détection selon la revendication 10, **caractérisé en ce qu'**il contient un code de programme qui peut être exécuté par un moyen de commande, en particulier par un processeur d'une commande (14) qui commande le moteur électrique (10).

12. Commande de moteur dotée d'un module de détection (23) selon l'une des revendications 10 ou 11, configurée pour commander le moteur électrique (10).

13. Moyen de mémoire, en particulier disquette ou CD-ROM, disque numérique versatile, disque dur ou similaires, sur lequel un module de détection selon la revendication 11 est conservé en mémoire.
